# EUROPÄISCHE PATENTSCHRIFT

(11) **EP 1 218 993 B1**
(45) Veröffentlichungstag und Bekanntmachung des Hinweises auf die Patenterteilung: **06.08.2008**
(21) Anmeldenummer: 00967551.3
(22) Anmeldetag: 11.09.2000
(51) Int. Cl.: H02B 1/056

(54) **ELEKTRISCHES SCHNELLANSCHLUSSSYSTEM**
RAPID ELECTRICAL CONNECTOR SYSTEM
SYSTEME DE RACCORDEMENT ELECTRIQUE RAPIDE

(30) Priorität: 05.10.1999 DE 19947834
(43) Veröffentlichungstag der Anmeldung: 03.07.2002
(73) Patentinhaber: SIEMENS AKTIENGESELLSCHAFT, 80333 München (DE)
(72) Erfinder: MEINKE, Martin, 92224 Amberg (DE)
(86) Internationale Anmeldenummer: PCT/DE2000/003146
(87) Internationale Veröffentlichungsnummer: WO 2001/026197

(56) Entgegenhaltungen:
- EP-A- 0 821 434

## Beschreibung

Die Erfindung bezieht sich auf ein elektrisches Schnellanschlußsystem mit einem Unterteil, auf dem Hauptenergieleitungen zum Hauptenergieanschluß, Signalleitungen und/oder Hilfsenergieleitungen halterbar sind, und mit einem auf das Unterteil aufschwenkbaren Geräteadapter, der erste Kontaktelemente aufweist, die beim Aufschwenken des Geräteadapters auf das Unterteil eine elektrische Verbindung mit den Hauptenergieleitungen, den Signalleitungen und/oder Hilfsenergieleitungen schaffen.

Außerdem bezieht sich die Erfindung auf ein Verfahren zum Schnellanschluß eines Geräteadapters, insbesondere eines Verbraucherabzweigs, an Hauptenergieleitungen zum Hauptenergieanschluß, Signalleitungen und/oder Hilfsenergieleitungen, die als formcodierte Flachkabel ausgeführt sind.

Ein gattungsgemäßes elektrisches Schnellanschlußsystem ist in der DE 195 25 438 A1 offenbart. Das hier beschriebene Sammelschienen-Adaptersystem dient zum Anschluß z.B. eines Motorabzweigs. Es ist aus einem Bodenteil mit Halterungselementen zur Aufnahme von Stromschienen und einem wannenförmige Oberteil zusammengesetzt. Durch Einhängen und Aufschwenken des wannenförmigen Oberteils, auf dem ein Motorabzweig befestigt ist, erfolgt eine Kontaktierung der Stromschienen und damit zugleich der elektrische Anschluß des Motorabzweigs. Die Stromschienen dienen zum Hauptenergieanschluß und zur Hilfsstromversorgung. Weiterhin ist das Bodenteil mit einer vielpoligen Busschiene versehen, wenn eine Kommunikation mit intelligenten Schaltgeräten vorgesehen ist.

Die EP 0 821 434 A1 zeigt ein Modul zum Anschluss von Aktoren und/oder Sensoren, das bei einfachem Aufbau die Kontaktierung, die Montage und den Service auf einfache W eise ermöglicht. Hierzu ist das Modul aus einer Montageplatte und einem zweitteiligen Gehäuseoberteil zusammengesetzt, in dem eine Leiterplatte demontierbar gehalten ist. Das Gehäuseoberteil ist unter gleichzeitiger Durchdingungskontaktierung von Kontaktstiften eines Flachkabels auf die Montageplatte aufschwenkbar.

Aus der EP 0 665 608 A2 ist ein Flachkabel mit zugehöriger Anschlußvorrichtung bekannt. Das Flachkabel enthält Bussignalleitungen sowie Hauptenergieleitungen. Mit einer derartigen Kabelanordnung können die spezifischen Versorgungsanforderungen industrieller Prozeßteilnehmer nur unzureichend bzw. unter erschwerten Bedingungen realisiert werden. Für Sensoren, z.B. Sonar-Sensoren, Lichtschranken, Grenztaster, etc., ist ein Zweileiteranschluß ausreichend. Kommunikationsfähige Aktuatoren, z.B. Magnetventile, benötigen einen Vierleiteranschluß, kommunikationsfähige Verbraucherabzweige müssen mit mindestens 8 Leitern, 2 Busadern, 2 Hilfsenergieleitungen und 4 Hauptenergieleitungen versorgt werden.

Bei einer engen Parallelführung von Hauptenergieleitungen und Signalleitungen müssen kostenintensive Maßnahmen zur Vermeidung von Störeinkopplungen, z.B. zusätzliche Schirmung der Signalleitungen, getroffen werden.

Während für einen Bussignalanschluß und einen Hilfsenergieanschluß ein Adernquerschnitt von 1,5 mm² ausreichend ist, sollte der Aderquerschnitt für Hauptenergieleitungen zum Zwecke der Energieverteilung mindestens 4 mm² betragen. Unterschiedliche Drahtquerschnitte und komponentengerechte Kabelzuführung lassen sich aber mit einem gemeinsamen Flachbandkabel nur schwer realisieren. Zudem wird mit zunehmender Anzahl der Adern die genaue Zuordnung der Kontaktierelemente zu den Einzeladern erschwert.

Schon aus wirtschaftlichen Gründen sollte die Art der Kontaktierung auf die jeweils zu übertragende Stromstärke abgestimmt sein. Für die Datenübertragung und Sensorversorgung sind Stromstärken kleiner 100 mA bei ca. 24 V DC ausreichend. Aktuatoren werden in der Regel mit 24 V DC und Stromstärken kleiner 2 mA versorgt. Im Bereich des Hauptenergieanschlusses müssen die Kontaktstellen Nennströme bis 12 A bei 400 V Wechselspannung übertragen. Diese Kontaktstellen müssen zudem die aufgrund der Anlagengegebenheiten maximal auftretenden unterschiedlichen Kurzschlußströme von 10 bis 20 A im Daten- und Hilfsenergiestromkreis und mehreren 1000 A im Hauptstromkreis bewältigen.

Die gleichzeitige Anwendung der Durchdringungstechnik für Hauptenergie, Hilfsenergie und Bussignalleitungen mit nur einem Arbeitsgang, nämlich der Aufschwenkbewegung, scheiterte bisher daran, daß die dafür benötigten Kräfte nicht über eine einzige Schwenkbewegung aufgebracht werden können. Die für eine saubere Kontaktierung erforderliche exakte Zuordnung von Kontaktierspitzen zu den Hauptenergieleitungen wäre bei einem derartigen Aufschwenken kaum möglich.

Daher liegt der Erfindung die Aufgabe zugrunde, ein elektrisches Schnellanschlußsystem der oben genannten Art zu schaffen, das in einfacher Weise einen Schnellanschluß von Geräteadaptern an Hauptenergieleitungen, Signalleitungen und/oder Hilfsenergieleitungen sowie einen Schnellaustausch eines kompletten Geräteadapters ermöglicht.

Eine weitere Aufgabe der Erfindung besteht in der Angabe eines Verfahrens zum Schnellanschluß eines Geräteadapters, insbesondere eines Verbraucherabzweigs, an Hauptenergieleitungen zum Hauptenergieanschluß, Signalleitungen und/oder Hilfsenergieleitungen, die als formcodierte Flachkabel ausgeführt sind.

Die Lösung der ersten Aufgabe ist durch folgende Merkmale gegeben:
a) das Unterteil ist als Montageplatte ausgeführt,
b) die Montageplatte weist Ausnehmungen zur Aufnahme von formcodierten Flachkabeln mit Hauptenergieleitungen, Signalleitungen und/oder Hilfsenergieleitungen auf,
c) die Montageplatte ist im Bereich der Ausnehmung zur Aufnahme des Flachkabels zum Hauptenergieanschluß mit einem Zwischenträger verbunden,
d) der Zwischenträger weist auf seiner dieser Ausnehmung zugewandten Seite erste Kontaktspieße zur Durchdringungskontaktierung eines in dieser Ausnehmung einlegbaren Flachkabels zum Hauptenergieanschluß auf,
e) der Zwischenträger weist auf seiner dem Geräteadapter zugewandten Seite elektrisch leitende Kontaktbuchsen auf,
f) die Kontaktbuchsen sind jeweils mit einem der ersten Kontaktspieße elektrisch leitend verbunden und
g) die Kontaktbuchsen sind als Kontaktierstifte ausgeführten ersten Kontaktelementen zu deren formschlüssiger Aufnahme angepaßt.

Die Lösung beinhaltet eine getrennte Verlegung von Signalleitungen und Hauptstromkreisleitungen, was zur Vermeidung von Störeinkopplungen besonders vorteilhaft ist.

Weiterhin können an die unterschiedlichen Stromstärken angepaßte Kontaktelemente zum Einsatz kommen und Störeinkopplungen von Hauptenergieleitungen auf Signalleitungen verhindert werden.

Eine vorteilhafte Weiterbildung der Erfindung besteht, wenn einige der ersten Kontaktelemente als zweite Kontaktspieße zur Durchdringungskontaktierung von in die Ausnehmungen der Montageplatte einlegbaren Flachkabeln zur Signalübertragung bzw. Hilfsenergieversorgung ausgeführt sind. Dies bedeutet, daß für die Kontaktierung der Hauptenergieleitungen und der Signalleitungen bzw. Hilfsenergieleitungen unterschiedliche Kontaktelemente verwendet werden.

Besonders vorteilhaft ist es, wenn der Geräteadapter als Verbraucherabzweig ausgeführt ist.

Weitere vorteilhafte Weiterbildungen sind den Unteransprüchen 4 bis 10 zu entnehmen.

Eine Lösung der zweiten Aufgabe ist durch die Merkmale gemäß Anspruch 11 gegeben.

Ein Ausführungsbeispiel der Erfindung wird im folgenden anhand einer Zeichnung näher erläutert. Es zeigen:
- FIG 1: eine perspektivische Ansicht eines erfindungsgemäßen elektrischen Schnellanschlußsystems mit einer Montageplatte, einem Zwischenträger und einem aufschwenkbaren Geräteadapter,
- FIG 2: eine Vorderansicht der Montageplatte gemäß FIG 1,
- FIG 3: eine Vorderansicht der Montageplatte gemäß FIG 1 mit eingelegten Flachkabeln und aufmontiertem Zwischenträger,
- FIG 4: eine Seitenansicht des Geräteadapters gemäß FIG 1,
- FIG 5: eine Schnittansicht eines Bereichs des Zwischenträgers mit einem federnd gelagerten Kontaktelement,
- FIG 6: eine Schnittansicht eines Bereichs des Zwischenträgers mit einem mittels isolierten Gewindebolzen federnd gelagerten Kontaktelements,
- FIG 7: eine Schnittansicht des Zwischenträgers gemäß FIG 5 und 6 mit einem kurzschlußstrombegrenzenden Element und
- FIG 8: einen als Verteiler ausgebildeten Zwischenträger.

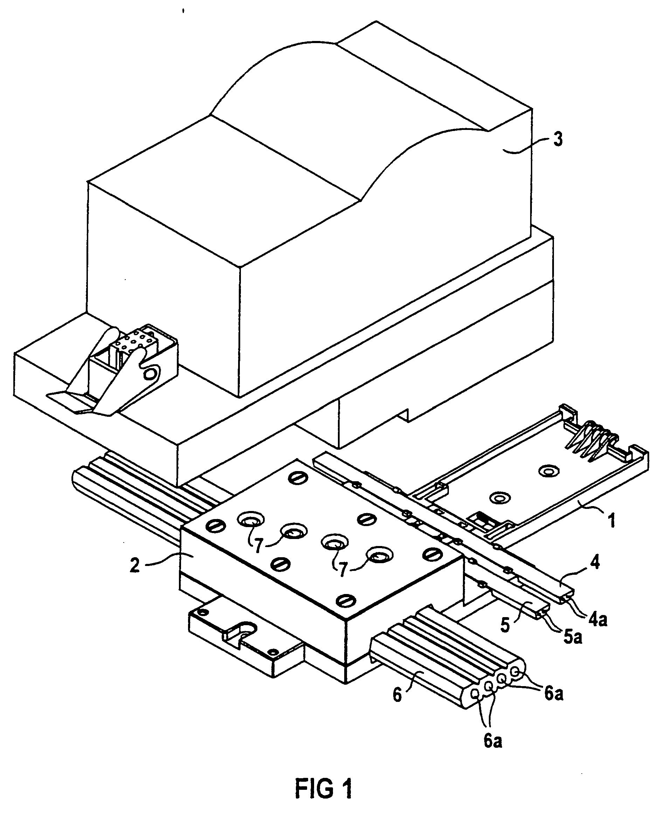

Das erfindungsgemäße elektrische Schnellanschlußsystem ist gemäß FIG 1 im wesentlichen aus einem als Montageplatte 1 ausgebildeten Unterteil, einem auf diese aufmontierten Zwischenträger 2 und einem Geräteadapter 3, hier einem Verbraucherabzweig, zusammengesetzt. Der Verbraucherabzweig 3 ist auf die Montageplatte 1 und den Zwischenträger 2 aufschwenkbar. Beim Aufschwenken wird eine elektrische Verbindung zwischen formcodierten Flachkabeln, hier einer formcodierten Zweidrahtleitung 4 mit Bussignalleitungen 4a zur Datenübertragung, einer formcodierten Zweidrahtleitung 5 mit Leitungsadern 5a zur Hilfsenergieversorgung und einem formcodierten Flachkabel 6 mit Hauptenergieleitungen 6a zum Hauptenergieanschluß, die auf der Montageplatte 1 gehalten sind, und den elektrischen Anschlüssen des Geräteadapters 3 hergestellt. Dabei dient der Zwischenträger 2 als Energiesteckdose mit Kontaktbuchsen 7, in die hier nicht sichtbare Kontaktstifte als Anschlüsse an der Unterseite des Geräteadapters 3 beim Aufschwenken eintauchen. Unter Steckbuchsen 7 werden auch buchsenähnliche Aufnehmungen verstanden.

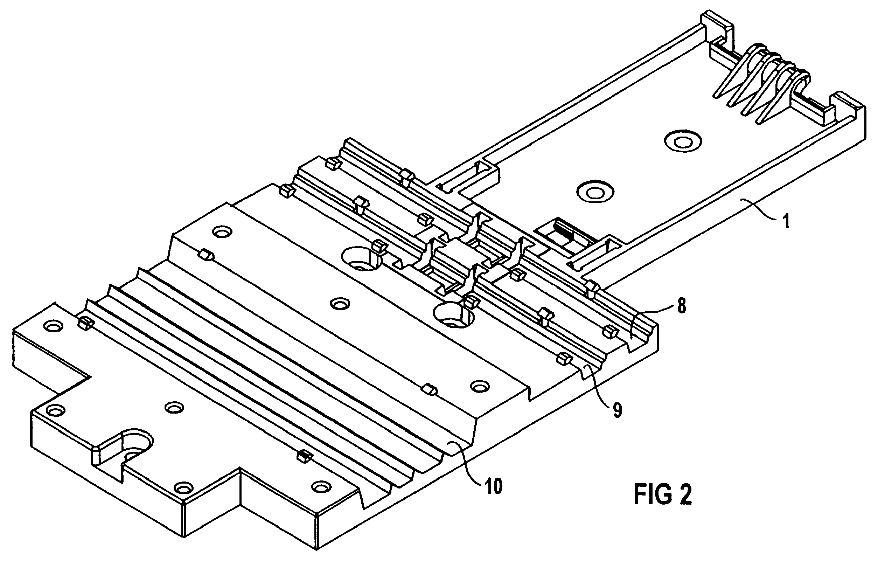

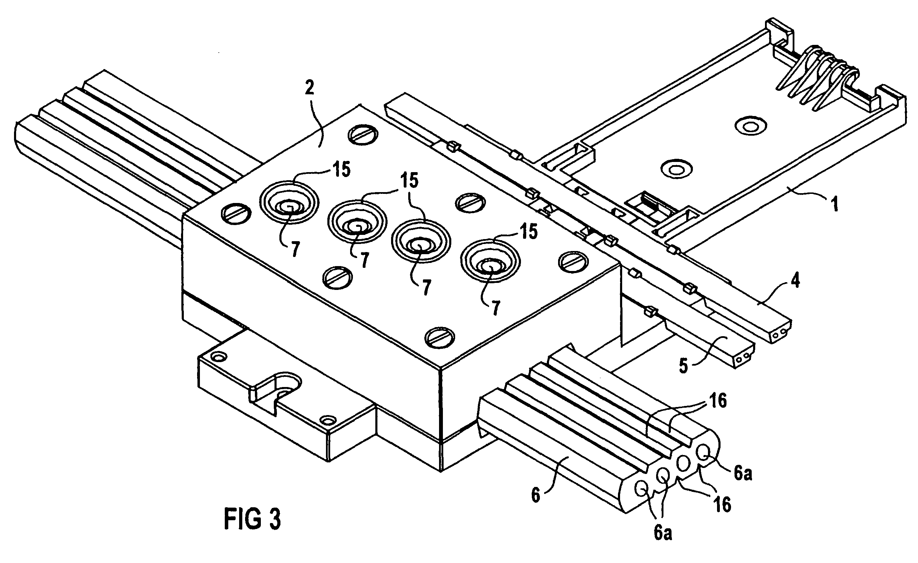

Zur Halterung der Flachkabel 4, 5 und 6 weist die Montageplatte 1 gemäß FIG 2,3 an die Formcodierung angepaßte Ausnehmungen 8, 9 und 10 auf. Die Montageplatte 1 dient also sowohl als Haltevorrichtung für die Flachkabel 4, 5 und 6 als auch für die Montage des kompletten Verbraucherabzweigs 3. Die Kontaktierung der Flachkabel 4, 5 und 6 erfolgt in Durchdringungstechnik, wobei das Kontaktieren der Bussignalleitungen 4a und der Hilfsenergieleitungen 5a direkt beim Aufschwenken des Verbraucherabzweigs 3 geschieht.

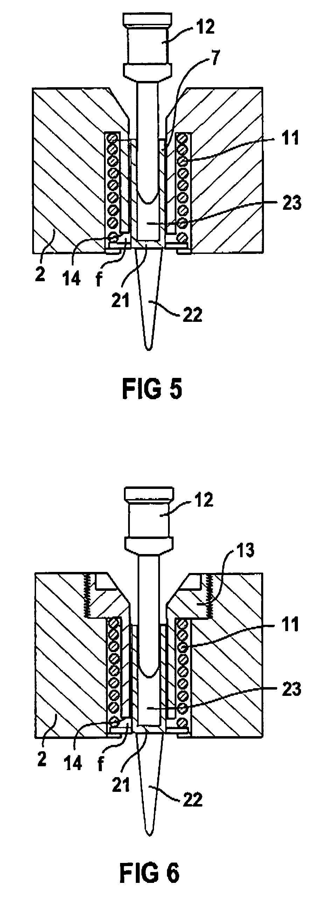

Das Kontaktieren der Hauptenergieleitungen 6a wird in einem vorangegangenen Arbeitsschritt, vorzugsweise durch Festschrauben des zwischenträgers 2 auf der Montageplatte 1 gemäß FIG 3 über angepaßte, federnd gelagerte Kontaktelemente 21 vorgenommen, die gemäß FIG 5 und 6 in dem fest mit der Montageplatte 1 verbindbaren Zwischenträger 2 angeordnet sind. Die Kontaktelemente 21 weisen rückseitig die Kontaktbuchsen 7 auf.

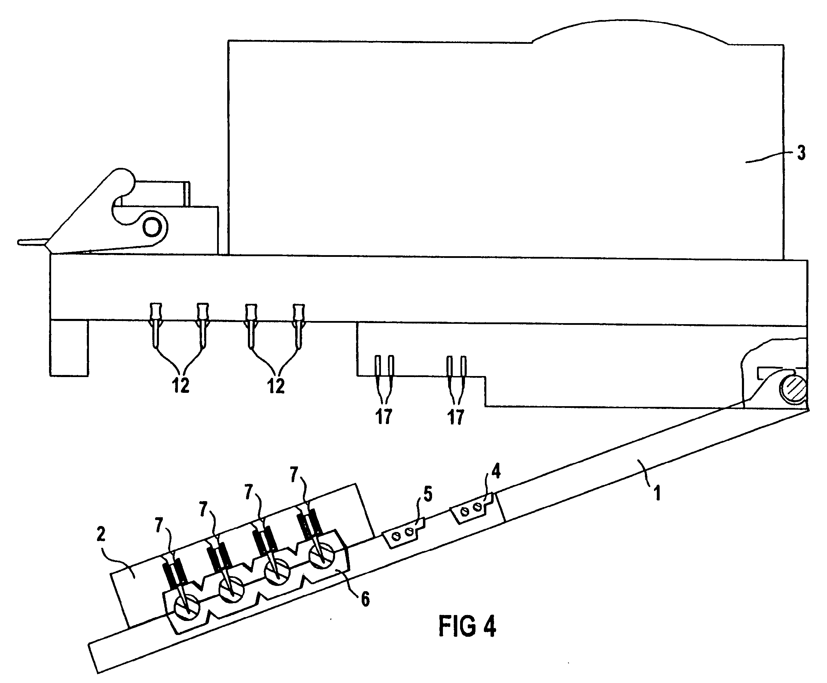

FIG 4 zeigt eine Seitenansicht des Verbraucherabzweigs 3 mit Kontaktierstiften 12 zur Kontaktierung mit den Kontaktbuchsen 7 des Zwischenträgers 2. Daneben ragen an der Unterseite des Verbraucherabzweigs Kontaktspieße 17 heraus, die zur direkten Durchdringungskontaktierung der Flachkabel 4 und 5 beim Aufschwenkvorgang dienen.

Gemäß FIG 5 werden für die Kontaktierung in Durchdringungstechnik vorzugsweise einteilige, ringsymmetrische Kontaktelemente 21 mit einem Kontaktspieß 22 am unteren Ende und einer als Kontaktbuchse 7 ausgeführten Öffnung 23 am oberen Ende verwendet. Diese Kontaktelemente 21 sind innerhalb des Zwischenträgers 2 derart federnd gelagert, daß beim Eindringen der Kontaktelemente 21 in den Kabelmantel des Flachkabels 6 zum Hauptenergieanschluß eine kraftschlüssige Verbindung zwischen dem Kontaktelement 21 und dem Zwischenträger 2 vorhanden ist, im montierten Zustand dagegen ein ausreichender Federweg zur Nachführung der Kontaktelemente 21 für den Ausgleich von Materialschwindungen bzw. durch Temperaturwechsel bedingten Materialbewegungen verbleibt.

Die Kontaktelemente 21 sind außerdem innerhalb des Zwischenträgers 2 über je ein Federelement, vorzugsweise eine Schraubenfeder 11, derart vorgespannt, daß ein deutlicher Kraftüberschuß zu den beim Lösen des Verbraucherabzweigs 3 auftretenden Reibkräften zwischen den Kontaktbuchsen 7 und Kontaktstiften 12 am Verbraucherabzweig 3 verbleibt und somit eine Relativbewegung des Kontaktspießes 22 der Hauptenergieleitung 6a verhindert wird.

Bei einer zweiten Ausführung des Zwischenträgers 2 gemäß FIG 6 wird die Kontaktierung des Flachkabels 6 zum Hauptenergieanschluß nicht schon beim Verbinden der Montageplatte 1 mit dem Zwischenträger 2, sondern nachträglich durch das Eindrehen von isolierenden Gewindebolzen 13 hergestellt.

Der freie Federweg f der Kontaktelemente 21 ist gemäß FIG 5 und 6 durch Anschläge 14 im Zwischenträger 2 begrenzt.

Die frontseitig am Zwischenträger 2 in Form einer Energiesteckdose ausgebildete Kontaktbuchsenanordnung mit den Buchsen 7 ist konstruktiv so ausgeführt, daß ein ausreichender Berührungsschutz gemäß IP 20 sowohl beim Aufschwenkvorgang, d.h. dem Eintauchen der Kontaktstifte 12 am Verbraucherabzweig 3 in die Buchsen 7, als auch bei abgenommenen verbraucherabzweig 3 gewährleistet ist.

Bei der Ausführungsart gemäß FIG 3 sind auf der Oberfläche des Zwischenträgers 2 sowie beidseitig der Einführung des Flachkabels 6 zum Hauptenergieanschluß Dichtelemente 15, vorzugsweise ringförmig, vorgesehen, über die bei montiertem Verbraucherabzweig 3 zumindest die Schutzart IP 65 sichergestellt wird.

Zur exakten Fixierung des Flachkabels 6 zum Hauptenergieanschluß ist der äußere Kabelmantel vorzugsweise mit dreieckigen Profilen 16 zwischen den einzelnen Leitungsadern 6a ausgeführt. Durch asymmetrische Anordnung bzw. unterschiedliche Tiefe dieser Profile 16 und angepaßte Gestaltung der Montageplatte 1 und des Zwischenträgers 2 kann eine seitenrichtige Montage des Flachkabels 6 zum Hauptenergieanschluß sichergestellt werden.

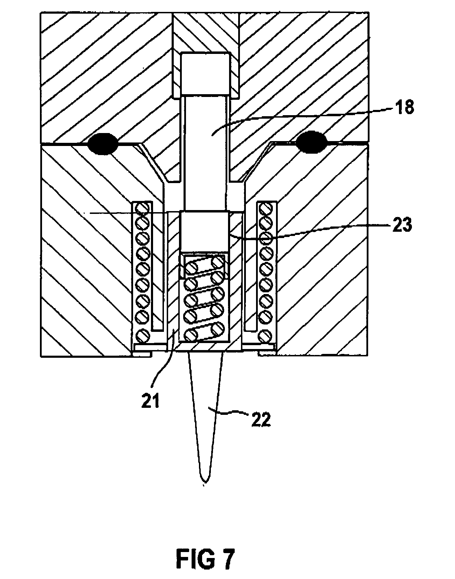

Die vorliegende Erfindung nutzt zudem die Erkenntnis, daß für eine kurzschlußfeste Hauptstromkreisankopplung mit Hilfe der Durchdringungstechnik ein Kurzschlußstrom begrenzendes Element 18, z.B. eine Schmelzsicherung oder ein Leistungsschalter, in unmittelbarer Nähe der Verbindung vorhanden sein muß, welches im Falle eines Kurzschlusses auf der abzweigenden E-nergieleitung, z.B. einer Motoranschlußleitung, den über die Kontaktstelle fließenden Strom auf ein unschädliches Maß begrenzt. Dieses kurzschlußstrombegrenzende Element 18 ist entweder im Verbraucherabzweig 3 oder direkt am jeweiligen Kontaktelement 21 angeordnet, wobei im zweiten Fall die obere Öffnung 23 des Kontaktelements 21 gleichzeitig als Sicherungshalter dienen kann (siehe FIG 7).

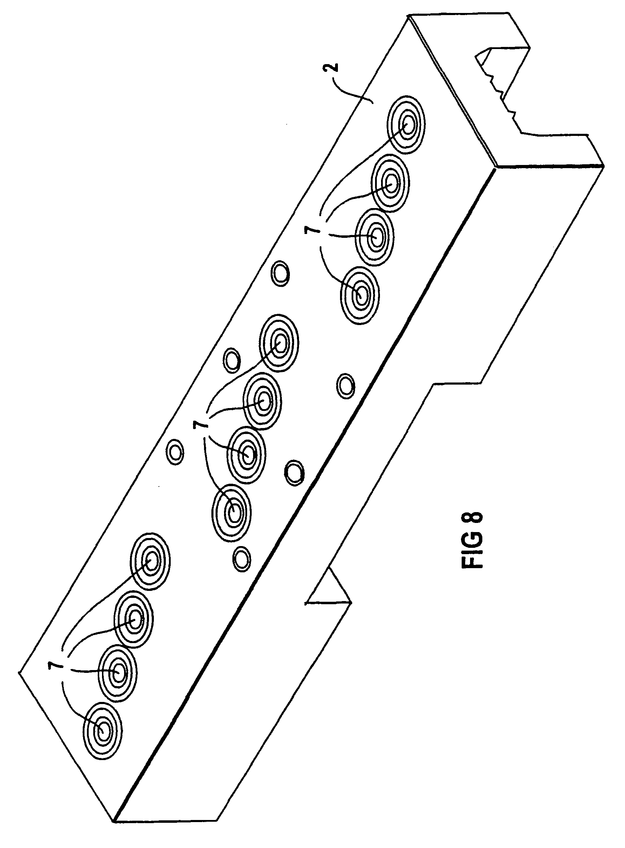

In FIG 8 ist ein Zwischenträger 2 in besonderer Ausgestaltung dargestellt, der insgesamt drei Kontaktbuchsenanordnungen mit Kontaktbuchsen 7 aufweist, wobei jeweils die drei im Leitungszug des Flachkabels liegenden Buchsen 7 elektrisch leitend miteinander verbunden sind. Nur die Buchsen 7 einer der drei Kontaktbuchsenanordnungen müssen über eine Durchdringungskontaktierung in der zuvor beschriebenen Weise mit den Leitungsadern 6a elektrisch leitend verbunden werden. Der als Verteiler ausgebildete Zwischenträger 2 gemäß FIG 8 ermöglicht demzufolge den Hauptenergieanschluß dreier Geräteadapter 3.

## Patentansprüche

1. Elektrisches Schnellanschlußsystem mit einem Unterteil (1), auf dem Hauptenergieleitungen (6a) zum Hauptenergieanschluß, Signalleitungen (4a) und/oder Hilfsenergieleitungen (5a) halterbar sind, und mit einem auf das Unterteil (1) aufschwenkbaren Geräteadapter (3), der erste Kontaktelemente (12,17) aufweist, die beim Aufschwenken des Geräteadapters (3) auf das Unterteil (1) eine elektrische Verbindung mit den Hauptenergieleitungen (6a), den Signalleitungen (4a) und/oder Hilfsenergieleitungen (5a) schaffen, wobei
a) das Unterteil als Montageplatte (1) ausgeführt ist,
b) die Montageplatte (1) erste Ausnehmungen (10) zur Aufnahme von ersten formcodierten Flachkabeln (6) mit Hauptenergieleitungen (6a) und weitere von der ersten Ausnehmung (10) getrennten Ausnehmungen (8,9) zur Aufnahme von formcodierten weiteren Flachkabeln (4,5) mit Signalleitungen (4a) und/oder Hilfsenergieleitungen (5a) aufweist,
c) die Montageplatte (1) im Bereich der ersten Ausnehmung (10) zur Aufnahme des ersten formcodierten Flachkabels (6) zum Hauptenergieanschluß mit einem Zwischenträger (2) verbunden ist,
d) der Zwischenträger (2) auf seiner dieser ersten Ausnehmung (10) zugewandten Seite erste Kontaktspieße (22) zur Durchdringungskontaktierung eines in dieser ersten Ausnehmung (10) einlegbaren ersten formcodierten Flachkabels (6) zum Hauptenergieanschluß aufweist,
e) der Zwischenträger (2) auf seiner dem Geräteadapter (3) zugewandten Seite elektrisch leitende Kontaktbuchsen (7) aufweist,
f) die Kontaktbuchsen (7) jeweils mit einem der ersten Kontaktspieße (22) elektrisch leitend verbunden sind und
g) die Kontaktbuchsen (7) an, als Kontaktierstifte (12) ausgeführten, ersten Kontaktelemente zu deren formschlüssiger Aufnahme angepasst sind.

2. Schnellanschlußsystem nach Anspruch 1, **dadurch gekennzeichnet, daß** einige der ersten Kontaktelemente (12) als zweite Kontaktspieße (18) zur Durchdringungskontaktierung von in die weiteren Ausnehmungen (8,9) der Montageplatte (1) einlegbaren weiteren Flachkabeln (4,5) zur Signalübertragung bzw. Hilfsenergieversorgung ausgeführt sind.

3. Schnellanschlußsystem nach Anspruch 1 oder 2, **dadurch gekennzeichnet, daß** der Geräteadapter (3) als Verbraucherabzweig (3) ausgeführt ist.

4. Schnellanschlußsystem nach einem der vorangehenden Ansprüche, **dadurch gekennzeichnet, daß** die zu den ersten Kontaktspieße (22) mit zugehörigen Kontaktbuchsen (7) als einstückige zweite Kontaktelemente (21) ausgeführt sind.

5. Schnellanschlußsystem nach einem der vorangehenden Ansprüche, **dadurch gekennzeichnet, daß** die Kontaktbuchsen (7) über isolierende Gewindebolzen (13) in dem Zwischenträger (2) gelagert sind.

6. Schnellanschlußsystem nach einem der vorangehenden Ansprüche, **dadurch gekennzeichnet, daß** im Zwischenträger (2) kurzschlußstrombegrenzende Elemente (18) gehaltert sind, die jeweils zur elektrischen Absicherung einzelner Hauptenergieleitungen (6a) dienen.

7. Schnellanschlußsystem nach Anspruch 6, **dadurch gekennzeichnet, daß** die kurzschlußstrombegrenzenden Elemente als Schmelzsicherungen (18) ausgeführt sind, die in den Kontaktbuchsen (7) gehaltert sind.

8. Schnellanschlußsystem nach einem der Ansprüche 4 bis 7, **dadurch gekennzeichnet, daß** die zweiten Kontaktelemente (21) durch Federn (11) vorgespannt im Zwischenträger (2) gelagert sind.

9. Schnellanschlußsystem nach Anspruch 8, **dadurch gekennzeichnet, daß** der Federweg (f) der zweiten Kontaktelemente (21) durch Anschläge (14) im Zwischenträger (2) begrenzt ist.

10. Schnellanschlußsystem nach einem der vorangehenden Ansprüche, **dadurch gekennzeichnet, daß** der Zwischenträger (2) als Verteiler mit mindestens zwei Kontaktbuchsenanordnungen mit Kontaktbuchsen (7) ausgebildet ist.

11. Verfahren zum Schnellanschluß eines Geräteadapters (3), insbesondere eines Verbraucherabzweigs, an Hauptenergieleitungen (6a) zum Hauptenergieanschluß, Signalleitungen (4a) und/oder Hilfsenergieleitungen (5a), die als erste und weitere formcodierte Flachkabel (4,5,6) ausgeführt sind, in folgenden Schritten:
- die Flachkabel (4,5,6) werden in entsprechend ausgebildete Ausnehmungen (8,9,10) einer Montageplatte (1) eingelegt,
- zur Kontaktierung des ersten formcodierten Flachkabels (6) zum Hauptenergieanschluß wird ein Zwischenträger (2) mit der Montageplatte (1) verbunden,
- eine Durchdringungskontaktierung von ersten, im Zwischenträger (2) gelagerten Kontaktspießen (22) mit den Hauptenergieleitungen (6a) des ersten formcodierten Flachkabels (6) erfolgt,
- anschließend wird der Geräteadapter (3) auf die Montageplatte (1) aufgeschwenkt,
- am Ende des Aufschwenkvorgangs gehen an der der Montageplatte (1) zugewandten Seite des Geräteadapters (3) herausragende Kontaktierstifte (12) eine formschlüssige Verbindung mit Kontaktbuchsen (7) des Zwischenträgers (2) ein, die jeweils mit einem der ersten Kontaktspieße (22) elektrisch leitend verbunden sind,
- zugleich erfolgt eine Durchdringungskontaktierung von zweiten aus dem Geräteadapter (3) herausragenden Kontaktspießen (17) mit den als weitere formcodierte Flachkabel (4,5) ausgeführten Signalleitungen (4a) und/oder Hilfsenergieleitungen (5a).

## Claims

1. Rapid electrical connection system with a lower part (1), on which main power lines (6a) for the main power connection, signal lines (4a) and/or backup power lines (5a) can be secured, and with a device adapter (3), which can be swiveled onto the lower part (1) and has first contact elements (12, 17), which create an electrical connection with the main power lines (6a), the signal lines (4a) and/or backup power lines (5a) when the device adapter (3) is swiveled onto the lower part (1),
a) the lower part being configured as a mounting plate (1),
b) the mounting plate (1) having first recesses (10) for receiving first form-coded flat cables (6) with main power lines (6a), and further recesses (8, 9), separated from the first recess (10), for receiving further form-coded flat cables (4, 5) with signal lines (4a) and/or backup power lines (5a),
c) the mounting plate (1) being connected in the region of the first recess (10) for receiving the form-coded flat cable (6) for the main power connection to an intermediate carrier (2),
d) the intermediate carrier (2) having on its side facing this first recess (10) first contact prongs (22) for the penetrative contacting of a first form-coded flat cable (6) which can be placed into this first recess (10) for the main power connection,
e) the intermediate carrier (2) having on its side facing the device adapter (3) electrically conducting contact bushes (7),
f) the contact bushes (7) being respectively connected in an electrically conducting manner to one of the first contact prongs (22) and
g) the contact bushes (7) being adapted to first contact elements, configured as contacting pins (12), for receiving them with positive engagement.

2. Rapid connection system according to Claim 1, **characterized in that** some of the first contact elements (12) are configured as second contact prongs (18) for the penetrative contacting of further flat cables (4, 5) which can be placed in the further recesses (8, 9) of the mounting plate (1) for signal transmission or backup power supply.

3. Rapid connection system according to Claim 1 or 2, **characterized in that** the device adapter is configured as a load feeder (3).

4. Rapid connection system according to one of the preceding claims, **characterized in that** the first contact prongs (22) with associated contact bushes (7) are configured as one-piece second contact elements (21).

5. Rapid connection system according to one of the preceding claims, **characterized in that** the contact bushes (7) are mounted in the intermediate carrier (2) by means of isolating threaded bolts (13).

6. Rapid connection system according to one of the preceding claims, **characterized in that** short-circuit-current limiting elements (18), which respectively serve for the electrical protection of individual main power lines (6a), are secured in the intermediate carrier (2).

7. Rapid connection system according to Claim 6, **characterized in that** the short-circuit-current limiting elements are configured as fusible links (18), which are secured in the contact bushes (7).

8. Rapid connection system according to one of Claims 4 to 7, **characterized in that,** biased by springs (11), the second contact elements (21) are mounted in the intermediate carrier (2).

9. Rapid connection system according to Claim 8, **characterized in that** the spring excursion (f) of the second contact elements (21) is limited by stops (14) in the intermediate carrier (2).

10. Rapid connection system according to one of the preceding claims, **characterized in that** the intermediate carrier (2) is designed as a distributor with at least two contact bush arrangements with contact bushes (7).

11. Method for the rapid connection of a device adapter (3), in particular a load feeder, to main power lines (6a) for the main power connection, signal lines (4a) and/or backup power lines (5a), which are configured as first and further form-coded flat cables (4, 5, 6), in the following steps:
- the flat cables (4, 5, 6) are placed in correspondingly formed recesses (8, 9, 10) of a mounting plate (1),
- for establishing the contact of the first form-coded flat cable (6) with respect to the main power connection, an intermediate carrier (2) is connected to the mounting plate (1),
- penetrative contacting of first contact prongs (22), mounted in the intermediate carrier (2), with the main power lines (6a) of the first form-coded flat cable (6) takes place,
- subsequently, the device adapter (3) is swiveled onto the mounting plate (1),
- at the end of the swiveling-on operation, contacting pins (12) protruding on the side of the device adapter (3) facing the mounting plate (1) enter into a positive connection with contact bushes (7) of the intermediate carrier (2), which are respectively connected in an electrically conducting manner to one of the first contact prongs (22),
- at the same time, penetrative contacting of second contact prongs (17), protruding from the device adapter (3), with the signal lines (4a) and/or backup power lines (5a), configured as further form-coded flat cables (4, 5), takes place.

## Revendications

1. Système de raccordement électrique rapide, comprenant une partie ( 1 ) inférieure sur laquelle peuvent être maintenues des lignes ( 6a ) principales d'énergie, pour le raccordement principal d'énergie des lignes ( 4a ) de signal et/ou des lignes ( 5a ) auxiliaires d'énergie et comprenant un adaptateur ( 3 ) d'appareil pouvant être rabattu sur la partie ( 1 ) inférieure et comportant des premiers éléments ( 12, 17 ) de contact qui, lors du rabattement de l'adaptateur ( 3 ) d'appareil sur la partie ( 1 ) inférieure, ménagent une liaison électrique avec les lignes ( 6a ) principales d'énergie, avec les lignes ( 4a ) de signal et/ou avec les lignes ( 5a ) auxiliaires d'énergie, dans lequel
a) la partie inférieure est réalisée sous la forme d'une plaque ( 1 ) de montage,
b) la plaque ( 1 ) de montage a de premiers évidements ( 10 ) de réception de premiers câbles ( 6 ) plats à codage de forme ayant des lignes ( 6a ) principales d'énergie et d'autres évidements ( 8, 9 ), distincts du premier évidement ( 10 ), de réception d'autres câbles ( 4, 5 ) plats à codage de forme ayant des lignes ( 4a ) de signal et/ou des lignes ( 5a ) auxiliaires d'énergie,
c) la plaque ( 1 ) de montage est assemblée à un support ( 2 ) intermédiaire dans la région du premier évidement ( 10 ) pour la réception des premiers câbles ( 6 ) plats à codage de forme pour le raccordement principal d'énergie,
d) le support ( 2 ) intermédiaire a, du côté tourné vers ce premier évidement ( 10 ), des premières aiguilles ( 22 ) de contact pour entrer en contact par traversée avec un premier câble ( 6 ) plat à codage de forme pouvant être mis dans ce premier évidement ( 10 ) pour le raccord principal d'énergie,
e) le support ( 2 ) intermédiaire a, du côté tourné vers l'adaptateur ( 3 ) d'appareil, des douilles ( 7 ) de contact conductrices de l'électricité,
f) les douilles ( 7 ) de contact sont reliées respectivement d'une manière conductrice de l'électricité à l'une des premières aiguilles ( 22 ) de contact et
g) les douilles ( 7 ) de contact sont adaptées pour leur réception à complémentarité de formes à de premiers éléments de contact réalisés sous la forme de broches ( 12 ) de contact.

2. Système de raccordement rapide suivant la revendication 1, **caractérisé en ce que** certains des premiers ( 12 ) éléments de contact sont réalisés sous la forme de deuxièmes aiguilles ( 18 ) de contact pour entrer en contact par traversée avec d'autres câbles ( 4, 5 ) plats pouvant être mis dans les autres évidements ( 8, 9 ) de la plaque ( 1 ) de montage pour la transmission du signal ou pour l'alimentation auxiliaire en énergie.

3. Système de raccordement rapide suivant la revendication 1 ou 2, **caractérisé en ce que** l'adaptateur ( 3 ) d'appareil est réalisé sous la forme d'une dérivation ( 3 ) de consommateur.

4. Système de raccordement rapide suivant l'une des revendications précédentes, **caractérisé en ce que** les douilles ( 7 ) de contact associées aux premières aiguilles ( 22 ) de contact sont réalisées sous la forme de deuxièmes éléments ( 21 ) de contact d'une seule pièce.

5. Système de raccordement rapide suivant l'une des revendications précédentes, **caractérisé en ce que** les douilles ( 7 ) de contact sont montées dans le support ( 2 ) intermédiaire par des axes ( 13 ) filetés isolants.

6. Système de raccordement rapide suivant l'une des revendications précédentes, **caractérisé en ce que** dans le support ( 2 ) intermédiaire sont maintenus des éléments ( 18 ) limitant le courant de court-circuit et servant, respectivement, à la protection électrique des diverses lignes ( 6a ) principales d'énergie.

7. Système de raccordement rapide suivant la revendication 6, **caractérisé en ce que** les éléments limitant le courant de court-circuit sont réalisés sous la forme de fusibles ( 18 ) qui sont maintenus dans les douilles ( 7 ) de contact.

8. Système de raccordement rapide suivant l'une des revendications 4 à 7, **caractérisé en ce que** les deuxièmes éléments ( 21 ) de contact sont montés dans le support ( 2 ) intermédiaire en étant mis sous contrainte préalable par des ressorts ( 11 ).

9. Système de raccordement rapide suivant la revendication 8, **caractérisé en ce que** la course ( f ) élastique des deuxièmes éléments ( 21 ) de contact est limitée par des butées ( 14 ) du support ( 2 ) intermédiaire.

10. Système de raccordement rapide suivant l'une des revendications précédentes, **caractérisé en ce que** le support ( 2 ) intermédiaire est constitué sous la forme d'un répartiteur ayant au moins deux dispositifs à douille ( 7 ) de contact.

11. Procédé de raccordement rapide d'un adaptateur ( 3 ) d'appareil, notamment d'une dérivation de consommateur à des lignes ( 6a ) principales d'énergie pour le raccordement principal en énergie, à des lignes ( 4a ) de signal et/ou à des lignes ( 5a ) auxiliaires d'énergie, qui sont réalisées sous la forme de premiers et d'autres câbles ( 4, 5, 6 ) plats à codage de forme en des stades suivants :
- on insère les câbles ( 4, 5, 6 ) plats dans des évidements ( 8, 9, 10 ) constitués de manière correspondante d'une plaque ( 1 ) de montage,
- pour la mise en contact du premier câble ( 6 ) plat à codage de forme pour le raccordement principal d'énergie, on assemble un support ( 2 ) intermédiaire à la plaque ( 1 ) de montage,
- on effectue une mise en contact par traversée de premières aiguilles ( 22 ) de contact montées dans le support ( 2 ) intermédiaire avec les lignes ( 6a ) principales d'énergie du premier câble ( 6 ) plat à codage de forme,
- on rabat ensuite l'adaptateur ( 3 ) d'appareil sur la plaque ( 1 ) de montage,
- à la fin de l'opération de rabattement, des broches ( 12 ) de contact en saillie du côté de l'adaptateur ( 3 ) d'appareil, tourné vers la plaque ( 1 ) de montage, entrent en liaison par complémentarité de formes avec des douilles ( 7 ) de contact du support ( 2 ) intermédiaire, qui sont reliées d'une manière conductrice de l'électricité, respectivement à l'une des premières aiguilles ( 22 ) de contact,
- on effectue en même temps une mise en contact par traversée de deuxièmes aiguilles ( 17 ) de contact en saillie de l'adaptateur ( 3 ) d'appareil avec les autres lignes ( 4a ) de signal et/ou les lignes ( 5a ) auxiliaires d'énergie réalisées sous la forme d'un autre câble ( 4, 5 ) plat à codage de forme.
